Europäisches Patentamt

(19) European Patent Office

Office européen des brevets

(11) Numéro de publication: **0 122 820**
**B1**

(12) # FASCICULE DE BREVET EUROPEEN

(45) Date de publication du fascicule du brevet:
13.05.87

(51) Int. Cl.⁴: **H 02 P 9/30**, H 02 J 7/24

(21) Numéro de dépôt: **84400421.8**

(22) Date de dépôt: **02.03.84**

(54) **Régulateur d'alternateur de charge de batterie.**

(30) Priorité: **11.03.83 FR 8304047**

(43) Date de publication de la demande:
**24.10.84 Bulletin 84/43**

(45) Mention de la délivrance du brevet:
**13.05.87 Bulletin 87/20**

(84) Etats contractants désignés:
**DE FR GB IT NL**

(56) Documents cités:
**FR - A - 1 360 322**
**FR - A - 2 008 278**
**US - A - 3 496 443**
**US - A - 4 362 983**

**RESEARCH DISCLOSURE, no. 181, mai 1979, pages 215-216, no. 18122, Havant, GB; "Voltage regulator for vehicle"**

(73) Titulaire: **THOMSON-CSF, 173, Boulevard Haussmann, F-75379 Paris Cedex 08 (FR)**

(72) Inventeur: **Moreau, Jean-Michel, THOMSON-CSF SCPI 173, bld Haussmann, F-75379 Paris Cedex 08 (FR)**

(74) Mandataire: **Guérin, Michel et al, THOMSON-CSF SCPI 19, avenue de Messine, F-75008 Paris (FR)**

## Description

La présente invention concerne de façon générale des circuits de régulation de tension d'alternateur et s'applique plus particulièrement dans le domaine de l'automobile à la stabilisation de tension de batterie. C'est dans cette application plus particulière que la présente invention sera essentiellement décrite bien qu'on puisse prévoir son utilisation dans d'autres systèmes de régulation.

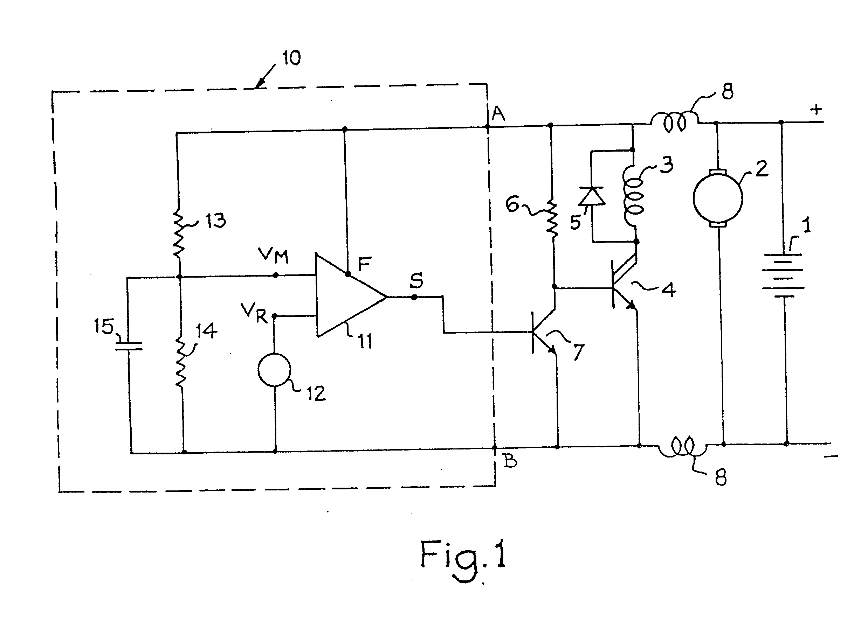

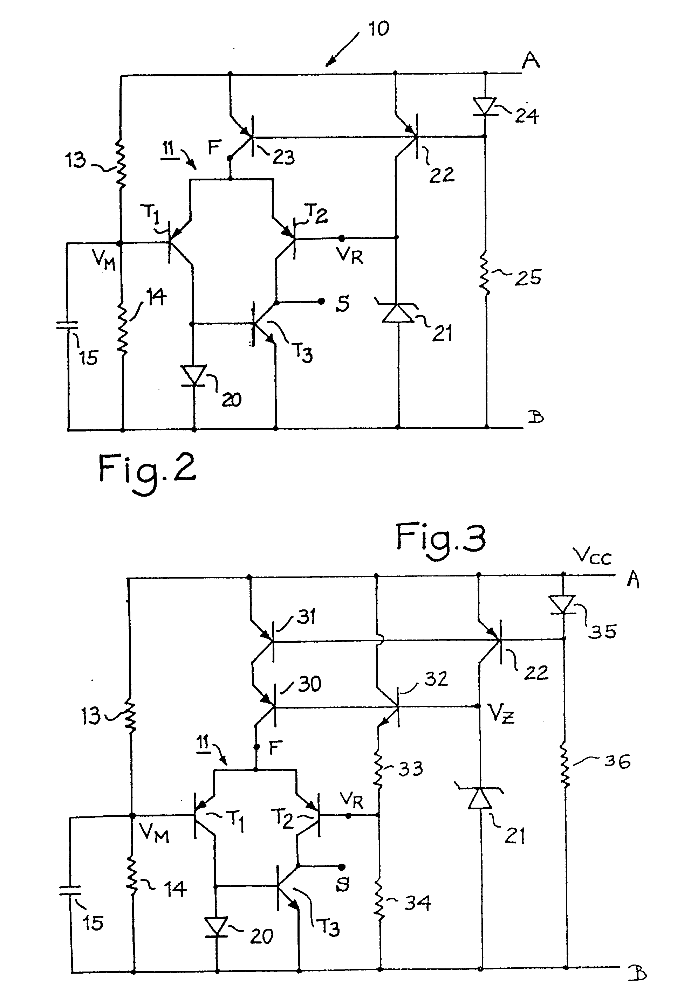

Pour permettre de définir le problème que vise à résoudre l'invention, on va d'abord décrire de façon relativement détaillée un régulateur d'alternateur de charge de batterie d'automobile classique en relation avec les figures 1 et 2. On pourra se reporter par ailleurs à un autre exemple d'art antérieur, constitué par le régulateur décrit dans le brevet français 2 008 278.

La figure 1 représente de façon très schématique un régulateur pour stabiliser la tension d'une batterie d'automobile. Cette batterie 1, qui sert à alimenter l'ensemble des circuits électriques ou électroniques d'une automobile, constitue généralement la seule source d'alimentation disponible. Il importe que cette tension soit relativement stable, par exemple autor d'une valeur comprise entre 13,5 et 14,5 volts en charge. On choisira par exemple que cette tension soit de 14,4 V à 0,1 V près. Cette batterie 1 est chargée par un alternateur 2 muni d'un enroulement d'excitation 3. L'enroulement est alimenté par la tension de batterie et est disposé en série avec un interrupteur tel qu'un transistor de puissance ou un montage Darlington 4. Ce montage Darlington est commandé pour être conducteur dès que la tension aux bornes de la batterie chute en-dessous de 14,3 volts, puis il est coupé dès que cette tension atteint une valeur de 14,5 volts. Une diode 5, dite diode roue libre, assure la continuité du passage du courant dans l'enroulement d'excitation 3. La base du transistor 4 est connectée à la borne positive de la tension d'alimentation par l'intermédiaire d'une impédance 6 et à la borne négative par l'intermédiaire d'un transistor 7. Ainsi, le transistor de puissance ou Darlington 4 est conducteur quand le transistor 7 est bloqué et bloqué quand le transistor 7 est conducteur.

Le circuit de régulation proprement dit, qui alimente ou non le transistor 7 en fonction de la tension aux bornes de la batterie, est représenté schématiquement à l'intérieur du cadre en pointillés 10. Ce circuit comprend un comparateur 11 dont la sortie S est reliée à la base du transistor 7. Le comparateur est alimenté à partir de la tension de batterie par une borne d'alimentation F, et reçoit une première tension d'entrée $V_M$ qui est comparée à une seconde tension d'entrée $V_R$ provenant d'une source de tension de référence 12. La tension $V_M$ correspond à la tension aux bornes de la batterie réduite de façon déterminée par un potentiomètre comprenant des résistances 13 et 14 et sera appelée «tension mesurée». Pour éviter l'influence de tensions parasites, il est nécessaire de prévoir aux bornes de la résistance 14 un condensateur 15 éliminant les surtensions brèves.

On a représenté dans cette figure 1 une source de tension de référence 12. En fait, il n'existe pas à proprement parler de source de tension de référence autonome indépendante de la tension de batterie, mais on obtient par des moyens divers, par exemple par utilisation de diodes Zener, une tension de référence à partir de la tension de batterie. Si, à un instant donné, la tension aux bornes A et B du circuit de régulation 10 devient trop faible et inférieure à la tension de référence $V_R$, on peut considérer que cette tension de référence $V_R$ chute à zéro. Par contre, si la tension aux bornes A et B chute rapidement, la tension mesurée $V_M$ ne chute pas aussi brutalement étant donné l'effet de mémorisation apporté par le condensateur 15. Par ailleurs, un comparateur peut généralement fonctionner même pour des tensions d'alimentation très faibles sur sa borne F. Ainsi, si pour une raison ou une autre, la tension aux bornes A et B chute à une valeur inférieure à la tension de référence, il faudrait obtenir à la sortie S du comparateur une indication représentative de ce fait, mais c'est exactement le contraire qui se produit puisque la valeur $V_R$ a chuté à zéro alors que $V_M$ est resté à un niveau relativement élevé en raison de la mémorisation par le condensateur 15. On obtient donc dans ce cas particulier une sortie S à un niveau inverse de celui qui est souhaité.

Ce défaut de fonctionnement se produit en fait lors de chaque commutation du Darlington 4. En effet, quand ce transistor est conducteur, l'enroulement d'excitation 3 est aux bornes de la batterie et le courant d'excitation croît. Quand ce courant atteint une valeur limite supérieure, déterminée par le circuit de régulation, le Darlington 4 est coupé, le courant dans l'enroulement d'excitation passe dans la diode roue libre et décroît. Puis, quand le Darlington 4 redevient conducteur, l'enroulement d'excitation est à nouveau mis aux bornes de la batterie et il circule un courant important dans les fils de câblage. Ces fils de câblage comprennent une inductance inhérente non localisée et arbitrairement et symboliquement représentée en figure 1 par des enroulements 8. Le brusque appel de courant provoque dans ces inductances parasites de câblage une chute de la tension d'une durée de quelques microsecondes. En conséquence, la tension d'alimentation apparente aux bornes A et B du circuit de régulation 10 chute et peut dans certains cas descendre à une valeur presque nulle et l'on se trouve alors dans le cas particulier exposé précédemment où $V_R$ est nul alors que $V_M$ ne l'est pas en raison de l'influence du condensateur 15. Il en résulte que le transistor 7 est rendu conducteur et que le Darlington 4 se bloque alors qu'au contraire on devrait maintenir la conduction dans l'enroulement 3. Ceci provoque une oscillation de tension et de courant à fréquence élevée; le régulateur fonctionne mal et le Darlington ou d'autres transistors du circuit peuvent être détruits.

La figure 2 représente un exemple de réalisation pratique et classique du régulateur 10 de la figure 1 et va être décrite plus en détail pour bien montrer que le phénomène exposé précédemment se produit en pratique. On retrouve en figure 2 le potentiomètre 13-14 et le condensateur 15 de la figure 1 ainsi que les bornes A, B, $V_M$, $V_R$, F et S du comparateur 11. Ce comparateur comprend deux transistors PNP T1 et T2. La base du transistor T1 reçoit la tension $V_M$ et son collecteur est connecté à la borne d'alimentation négative par l'intermédiaire d'une diode 20. La base du transistor T2 reçoit la tension de référence $V_R$ et son collecteur, qui sert de borne de sortie S, est relié à la borne d'alimentation négative B par l'intermédiaire d'un transistor NPN T3 dont la base est connectée au collecteur du transistor T1. La tension de référence est fournie par une diode Zener 21 alimentée par un transistor PNP 22. Les émetteurs des transistors T1 et T2, reliés à la borne F, sont connectés à la borne d'alimentation positive A par l'intermédiaire d'un transistor PNP 23 dont l'émetteur est relié à celui du transistor 22 et dont la base est commune avec celle du transistor 22. Ces bases sont alimentées par le point commun d'une diode 24 et d'une résistance 25 disposées entre les bornes d'alimentation positive et négative A et B.

Le fonctionnement de ce régulateur est le suivant. Si la tension $V_M$ est inférieure à la tension de référence $V_R$, le transistor T1 est conducteur alors que le transistor T2 est bloqué et le transistor T3 est également conducteur. Le signal S de sortie est donc à bas niveau, ce qui assure le blocage du transistor 7 et la mise en conduction du Darlington 4 et donc l'excitation de l'alternateur 2. Inversement, si $V_M$ devient supérieur à $V_R$, T1 et T3 sont bloqués alors que T2 est conducteur et un signal à haut niveau apparaît à la borne S, ce qui rend conducteur le transistor 7 et bloque le Darlington 4.

Dans le cas considéré précédemment où la tension aux bornes A et B du circuit de régulation 10 chute momentanément à une valeur très faible, inférieure à la tension de la diode Zener 21, plus aucun courant ne circule dans cette diode Zener et la tension $V_M$ maintenue par le condensateur 15 apparaît supérieure à la tension $V_R$; la borne S est alors à haut niveau, et le Darlington 4 se bloque.

La présente invention vise à éviter cet inconvénient et à maintenir un fonctionnement correct du régulateur dans toutes les configurations et notamment quand la tension d'alimentation du régulateur chute rapidement.

Pour atteindre cet objet l'invention prévoit un régulateur de tension de batterie comprenant un circuit pour fournir une tension d'excitation à un alternateur dès que la tension de batterie chute en dessous d'une tension prédéterminée, ce régulateur comprenant un comparateur alimenté par la tension de batterie et dont l'une des entrées reçoit une tension de mesure qui est une fraction de la tension de batterie et qui est stabilisée par une capacité et dont l'autre entrée reçoit une tension de référence obtenue à partir de la tension de batterie par l'intermédiaire d'un élément de référence fournissant une tension constante, caractérisé par un moyen de commutation qui interrompt la fourniture de la tension d'alimentation du comparateur dès que la tension de batterie chute en dessous d'une tension égalant celle de l'élément de référence de telle sorte que le signal de sortie du comparateur s'annule entraînant la fourniture d'une tension d'excitation à l'alternateur.

Ces caractéristiques et avantages de la présente invention seront exposés plus en détail dans la description suivante d'un mode de réalisation particulier faite en relation avec les figures jointes parmi lesquelles:

les figures 1 et 2 qui représentent des régulateurs de l'art antérieur ont été décrites précédemment,

la figure 3 représente un régulateur selon la présente invention.

Comme le dispositif de l'art antérieur, le régulateur de la figure 3 est connecté entre des bornes d'alimentation positive et négative A et B. Il comprend des résistances 13 et 14 connectées en potentiomètre et fournissant la tension $V_M$, un condensateur 15 étant en parallèle sur la résistance 14. Le comparateur proprement dit qui reçoit la tension de référence $V_R$ et une tension d'alimentation sur sa borne F pour fournir un signal de sortie S comprend les mêmes transistors T1, T2, T3 et la même diode 20 connectée de la même manière que dans le circuit classique.

La différence principale entre le circuit classique et la présente invention réside dans la façon dont sont appliqués le potentiel d'alimentation du comparateur et la tension de référence. Les émetteurs des transistors T1 et T2, c'est-à-dire la borne F, sont connectés à la borne d'alimentation positive A par l'intermédiaire de deux transistors PNP 30 et 31 en série. Entre les bornes d'alimentation positve et négative A et B, est également disposée la connexion en série d'un transistor NPN 32 et d'un potentiomètre comprenant des résistances 33 et 34, la tension de référence $V_R$ étant prise entre ces résistances 33 et 34. Une diode Zener 21 en série avec un transistor PNP 22 est disposée entre les bornes A et B. Le point de jonction entre la diode Zener 21 et le transistor 22 est relié aux bases des transistors 30 et 32. La base du transistor 22 est reliée à la base du transistor 31 et au point de jonction d'une diode 35 et d'une résistance 36.

Le transistor 32 étant un transistor NPN dont l'émetteur est relié à la résistance 33, la tension aux bornes du potentiomètre 33-34 est égale à la tension $V_Z$ de la diode Zener moins la tension base/émetteur $V_{BE}$ du transistor 32. Ainsi, la tension aux bornes de ce potentiomètre est sensiblement égale à la tension $V_Z$ réduite d'une tension base/émetteur $V_{BE}$ qui est sensiblement constante et égale à une valeur de l'ordre de 0,6 à 0,7 volt. La diode Zener est convenablement alimentée tant que la tension entre les bornes d'alimentation positive et négative A et B est supérieure ou égale à $V_Z$ plus la tension de saturation collecteur/émetteur $V_{CEsat}$ du transistor PNP 22. Si on appelle $V_{CC}$ la tension d'alimentation entre les bornes positive et négative, ou pourra écrire que la tension $V_Z$ est normalement fournie, c'est-à-dire que la tension de référence $V_R$ est normalement présente, tant que $V_{CC}$ est supérieur ou égal à $V_Z + V_{CEsat}$. Classiquement, la valeur $V_{CEsat}$ d'un transistor PNP intégré est de l'ordre de quelques dizaines de millivolts. Mais on notera que, quand la tension atteint cette valeur, les bornes de base et d'émetteur du transistor 30 sont sensiblement au même potentiel, la borne d'émetteur de ce transistor voyant également la tension $V_{CC}$ réduite de la tension $V_{CEsat}$ du transistor 31; en conséquence, le transistor 30 est alors bloqué, c'est-à-dire que le comparateur 11 n'est plus alimenté. Plus précisement, ce transistor 30 cesse d'être alimenté dès que:

$$V_{CC} = V_Z + V_{BE(30)} + V_{CEsat(31)},$$

c'est-à-dire essentiellement dès que la tension d'alimentation Vcc chute à une valeur égale à $V_Z$ augmentée d'une valeur correspondant à la chute de tension base/émetteur du transistor 30, soit une valeur d'environ 600 à 700 millivolts. A ce moment, le comparateur 11 n'est plus alimenté et il n'est plus possible d'extraire un courant de la borne de sortie S, ce qui signifie dans le cas du montage de la figure 1 que le transistor 7 ne peut plus être rendu conducteur et donc le montage Darlington 4 est maintenu à l'état conducteur.

En d'autres termes, avec un choix convenable d'une structure d'adaptation reliée à la borne de sortie S, on peut fixer un signal de commande prédéterminé dans le cas où la tension d'alimentation Vcc descend à une valeur peu supérieure à la tension fixée par un moyen de fourniture de tension de référence. On évite ainsi les inconvénients des dispositifs de l'art antérieur précédemment décrits.

**Revendications**

1. Régulateur (10) de tension de batterie comprenant un circuit pour fournir une tension d'excitation à un alternateur (2, 3) dès que la tension de batterie chute en dessous d'une tension prédéterminée, ce régulateur comprenant un comparateur (11) alimenté par la tension de batterie et dont l'une des entrées reçoit une tension de mesure ($V_M$ qui est une fraction de la tension de batterie et qui est stabilisée par une capacité (15) et dont l'autre entrée reçoit une tension de référence ($V_R$) obtenue à partir de la tension de batterie par l'intermédiaire d'un élément de référence (21) fournissant une tension constante ($V_Z$), caractérisé par un moyen de commutation (30) qui interrompt la fourniture de la tension d'alimentation du comparateur dès que la tension de batterie chute en dessous d'une tension égalant celle ($V_Z$) de lélément de référence (21) de telle sorte que le signal de sortie (S) du comparateur (11) s'annule entraînant la fourniture d'une tension d'excitation à l'alternateur (2, 3).

2. Régulateur selon la revendication 1, caractérisé en ce que la tension d'alimentation du comparateur est fournie par l'intermédiaire d'une chaîne de transistors (30-31), le transistor le plus proche de la borne d'alimentation étant commandé par la tension aux bornes de l'élément de référence, elle-même obtenue à partir de la tension de batterie avec interposition d'un nombre de transistors moindre.

**Patentansprüche**

1. Batteriespannungsregler (10) mit einer Schaltung, um eine Erregerspannung einem Wechselrichter (2, 3) zuzuführen, sobald die Batteriespannung unter einen vorbestimmten Spannungswert absinkt, wobei dieser Regler einen Komparator (11) umfasst, welcher durch die Batteriespannung gespeist wird und wovon einer der Eingänge eine Messspannung ($V_M$) empfängt, die ein Bruchteil der Batteriespannung sowie durch eine Kapazität (15) stabilisiert ist, während der andere Eingang eine Referenzspannung ($V_R$) empfängt, die aus der Batteriespannung über ein Referenzelement (21) gewonnen wird, welches eine konstante Spannung ($V_Z$) liefert, gekennzeichnet durch eine Schalteinrichtung (30), welche die Versorgungsspannungszufuhr zum Komparator unterbricht, sobald die Batteriespannung unter eine Spannung absinkt, die gleich derjenigen ($V_Z$) des Referenzelementes (21) ist, so dass das Ausgangssignal (S) des Komparators (11) verschwindet, wodurch die Zufuhr einer Erregerspannung zu dem Wechselrichter (2, 3) ausgelöst wird.

2. Regler nach Anspruch 1, dadurch gekennzeichnet, dass die Versorgungsspannung des Komparators über eine Reihenschaltung von Transistoren (30-31) geliefert wird, wobei der dem Versorgungsanschluss am nächsten liegende Transistor durch die Spannung an den Anschlüssen des Referenzelementes gesteuert wird, die ihrerseits aus der Batteriespannung unter Einführung einer geringeren Anzahl von Transistoren gewonnen wird.

**Claims**

1. Battery voltage regulator (10) comprising a circuit for supplying an excitation voltage to a current inverter (2, 3) as soon as the battery voltage drops below a predetermined voltage, this regulator comprising a comparator (11) supplied by the battery voltage and one of the inputs of which receives a measurement voltage ($V_M$) which is a fraction of the battery voltage stabilized by a capacitor (15) and the other input of which receives a reference voltage ($V_R$) obtained from the battery voltage through a reference element (21) supplying a constant voltage ($V_Z$), characterized by switching means (30) interrupting the feed of supply voltage to the comparator as soon as the battery voltage drops below a voltage equal to that ($V_Z$) of the reference element (21) in such a manner that the output signal (S) of the comparator (11) vanishes whereby the supply of an excitation voltage to the current inverter (2, 3) is caused.

2. Regulator according to claim 1, characterized in that the supply voltage of the comparator is fed through a chain of transistors (30-31), the transistor closest to the supply terminal being controlled by the voltage at the terminals of the reference element which in turn is obtained from the battery voltage with interposition of a smaller number of transistors.

Fig.1

0 122 820

Fig.2

Fig.3